# DEMANDE DE BREVET EUROPEEN

(11) **EP 0 609 115 A1**
(43) Date de publication de la demande: **03.08.1994**
(21) Numéro de dépôt: 94400106.4
(22) Date de dépôt: 18.01.1994
(51) Int. Cl.: B65B 35/02, B65G 59/06

(54) **Dispositif de comptage et de distribution de blisters**

(30) Priorité: 27.01.1993 FR 9300788
(71) Demandeur: LABORATOIRES FOURNIER S.C.A., F-21000 Dijon (FR)
(72) Inventeur: Detallante, Georges, F-21600 Longvic (FR); Beuret, Bernard, F-21310 Mirebeau sur Bèze (FR)
(74) Mandataire: Levy, David

(57) **Abrégé**

Il est caractérisé en ce qu'il comprend au moins une paire de roues dentées (7a, 7b), des moyens d'entraînement (17a, 17b) en rotation contrôlée des roues dentées et des moyens d'asservissement des moyens d'entraînement pour permettre le comptage et la distribution des blisters (1) qui sont disposés les uns au-dessus de autres dans le magasin.

Applications notamment au comptage et à la distribution de produits préemballés.

## Description

La présente invention concerne un dispositif adapté au comptage et à la distribution de produits préemballés sous forme de plaques comportant des alvéoles (appelées communément "Blisters"), et adaptable à une machine de conditionnement, notamment le conditionnement en boîte de produits industriels tels que des médicaments, disposés dans les alvéoles et emballés sous blister.

Lors du conditionnement de produits industriels préemballés sous forme de blister, il est nécessaire de compter et de rassembler par groupes les blisters, afin de les emballer ensuite dans une boîte ou étui qui sera l'emballage de présentation au consommateur, chaque groupe de blisters pouvant être constitué par un ou plusieurs blisters. Sur les chaînes de conditionnement, une première partie de la machine fabrique, remplit, soude et découpe des blisters qui sortent sur un tapis roulant ou tout autre dispositif adapté. Ces blisters doivent être ensuite regroupés par quantité déterminée pour être ensuite placés dans un étui qui est l'emballage définitif de présentation au consommateur. Le regroupement des blisters en nombre déterminé est souvent, sur ce type de machine, la phase délicate et occasionne de fréquents réglages qui diminuent sensiblement le temps de fonctionnement de l'ensemble de la chaîne de conditionnement. Pour assurer cette fonction, divers systèmes sont utilisés tels que, par exemple, des systèmes à deux vis sans fin ou des systèmes à doigts multiples. Les systèmes habituels sont généralement satisfaisants lorsque la machine travaille à faible cadence mais deviennent moins performants lorsque l'on souhaite des rythmes de fonctionnement rapides ou quand les blisters présentent des défauts de planéité. D'autre part, les réglages de ces systèmes sont souvent délicats, et il est, en particulier, difficile d'obtenir une libération parfaitement synchronisée des deux côtés du blister pour éviter le retournement dudit blister.

Selon l'invention, on propose un dispositif de comptage et de distribution de blisters comportant un nombre minimum de séquences à chaque distribution, tout en évitant le retournement d'un blister malgré un éventuel défaut de planéité dudit blister.

La présente invention a pour objet un dispositif de comptage et de distribution pour blister comportant au moins deux roues dentées entraînées de façon synchrone en sens inverse et dont l'écartement ou intervalle entre deux dents consécutives est égal sensiblement à l'épaisseur totale du blister.

En contrôlant de façon précise la rotation des roues dentées, on peut faire tomber par gravité un nombre prédéterminé de blisters dans les compartiments (godets) d'une machine à conditionner en boîtes.

A cet effet, le dispositif selon l'invention est caractérisé en ce qu'il comprend au moins une paire de roues dentées, des moyens d'entrainement en rotation contrôlée des roues dentées et des moyens d'asservissement pour permettre le comptage et la distribution de blisters qui sont disposés les uns au-dessus des autres dans un magasin.

D'autres avantages et caractéristiques apparaîtront mieux à la lecture d'un mode de réalisation préféré de l'invention, ainsi que des dessins annexés sur lesquels :

La figure 1 est une vue en perspective d'un mode de réalisation du dispositif de comptage et de distribution selon l'invention.

La figure 2 est une vue de face partielle des moyens de comptage et de distribution de blisters.

La figure 2a est une vue partielle agrandie de quelques dents des roues dentées représentées sur la figure 1 et partiellement sur la figure 2.

La figure 3 est une vue arrière et partielle du dispositif de la figure 1 avec des premiers moyens d'entraînement des roues dentées.

La figure 4 est une vue arrière et partielle du dispositif de la figure 1 avec des seconds moyens d'entraînement des roue dentées.

Les figures 5 et 6 sont des vues arrière et partielles du dispositif de la figure 1 avec respectivement des troisième et quatrième moyens d'entraînement des roues dentées.

Le dispositif de comptage et de distribution de blisters 1 est un sous-ensemble d'une chaîne de conditionnement, non représentée, qui comprend également des moyens d'amenée des blisters 1 dans le dispositif de comptage, des moyens d'évacuation desdits blisters après comptage et des moyens d'introduction dans les conditionnements tels qu'ils seront présentés aux consommateurs.

Le dispositif de comptage et de distribution de blisters 1 comprend une platine ou châssis de support 2 qui peut être en une ou plusieurs parties, en métal ou en matière synthétique très rigide, ladite platine support comprenant des organes de fixation, non représentés, pour adapter le dispositif selon l'invention à la chaîne de conditionnement.

Un magasin 3 pour les blisters 1, est monté sur la platine support 2 et il est constitué de montants verticaux 4 et de traverses 5 de maintien des montants verticaux, lesdits montants et traverses étant en métal ou en matière synthétique rigide. Les montants verticaux sont disposés de façon à guider les blisters 1 qui sont empilés à l'intérieur du magasin 3. Les faces de contact 6 des montants verticaux 4 sont parfaitement lisses. Les montants verticaux 4 sont réglables dans deux directions perpendiculaires afin de s'adapter à différentes dimensions de blisters 1 qui doivent être introduits dans le magasin 3.

A l'intérieur du magasin 3, les blisters 1 sont empilés soit avec les alvéoles dirigées vers le bas (de préférence), soit avec les alvéoles dirigées vers le haut, mais doivent être dans le même sens. Le magasin 3 peut comprendre également un détecteur de proximité dont l'information sera transmise au système de commande des roues dentées afin d'arrêter le fonctionnement lorsque la quantité de blisters stockés dans le magasin sera insuffisante.

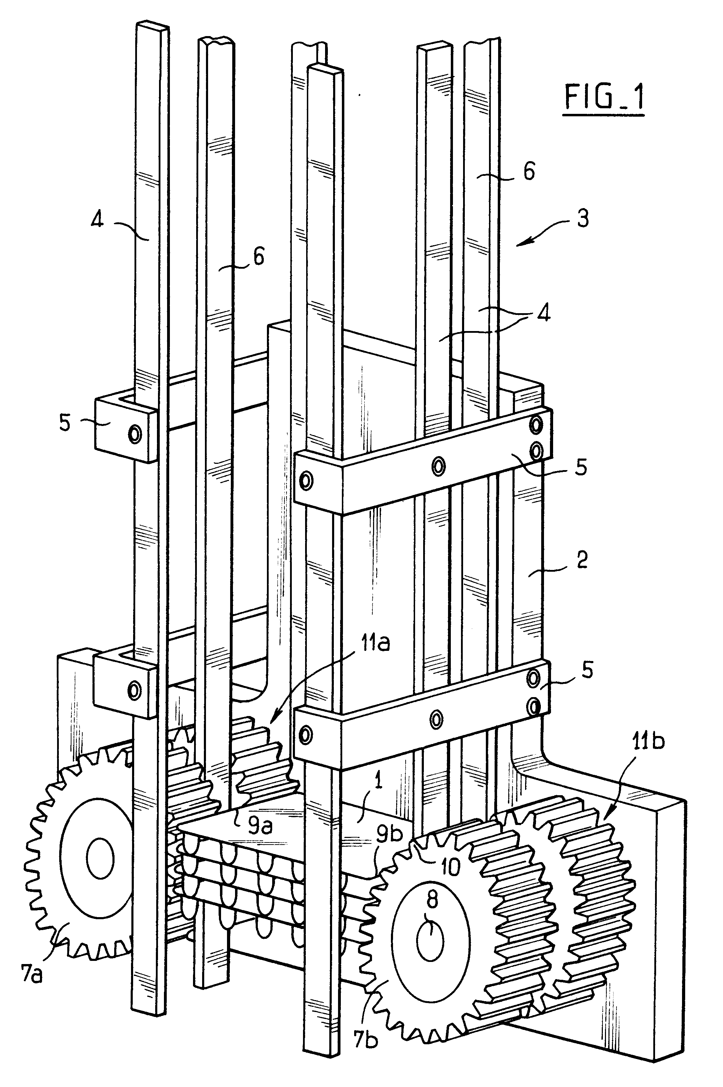

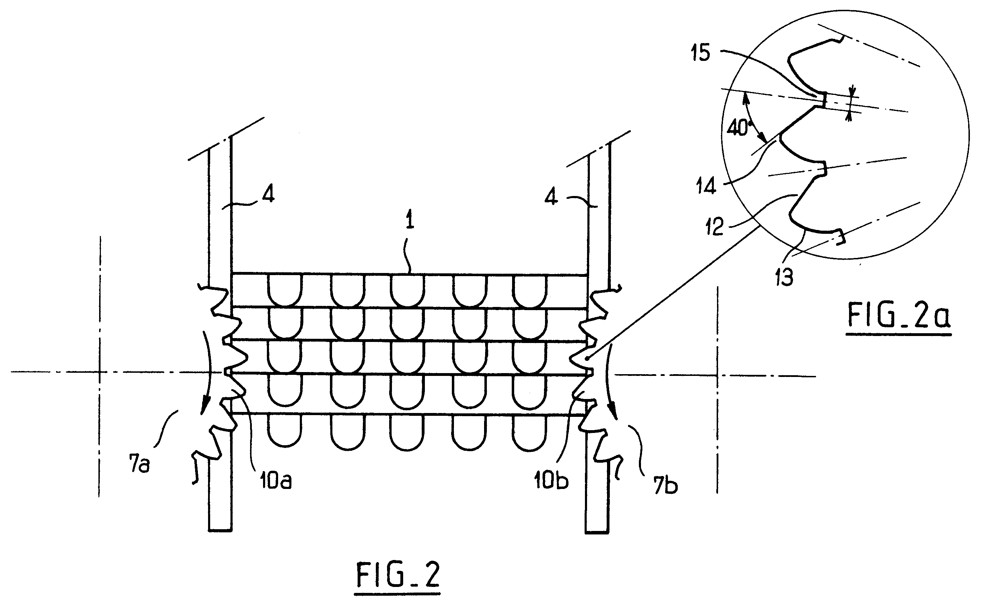

Sur la platine support 2 est fixée au moins une paire de roues dentées 7a et 7b à axes 8 parallèles dont l'écartement réglable est tel que deux côtés opposés 9a et 9b du blister viennent engrener entre les dents 10 des roues dentées 7a,7b. On peut utiliser seulement deux roues dentées pour des blisters de petite taille, mais on peut utiliser des dispositifs tels que celui représenté sur la figure 1, comportant quatre roues dentées 7a,7b et 11a, 11b, ce qui permet de guider des blisters plus grands sur toute la longueur de leurs côtés d'engrènement jusqu'à leur sortie du dispositif. Les roues dentées 7a,7b,11a,11b sont en un matériau rigide comme par exemple un métal, un alliage ou une matière synthétique rigide. On utilisera de préférence des matériaux synthétiques comme par exemple des polyamides (nylon) ou des résines qui présentent l'avantage d'être légers et d'avoir une faible inertie. La taille des dents 10 des roues dentées doit être telle que l'intervalle ou pas entre deux dents 10 consécutives corresponde sensiblement à l'épaisseur totale d'un blister y compris la profondeur des alvéoles. Chaque dent 10 présente un chanfrein 12 prononcé de façon à faciliter l'introduction de la dent entre deux blisters consécutifs 1. De préférence, les dents 10 auront une taille asymétrique et la figure 2a représente une taille de dent convenant bien au fonctionnement d'un dispositif de distribution et de comptage selon l'invention. Chaque dent 10 comprend un chanfrein 12 qui est incliné d'environ 40° sur l'horizontale et une partie arrondie 13 dont la courbure est adaptée pour éviter toute gêne pour le blister 1 de s'extraire des roues dentées 10. La dimension de la roue dentée est telle que le nombre de ses dents est compris entre 5 et 60. Le nombre minimum de dents doit être tel qu'au moins un blister soit maintenu par les roues dentées. D'autre part, un nombre trop important de dents entraîne des difficultés de réglage de la quantité de blisters à libérer en un seul groupe.

De plus, les dents 10 des roues dentées qui sont de type usuel et dénommées de Module 2,5, comportent un méplat 14 de faible largeur, par exemple de l'ordre de 1mm, de manière à réduire le plus possible les contacts des côtés des blisters sur les dents et permettre ainsi une meilleure introduction desdits blisters entre les dents. En ce qui concerne la profondeur et la largeur de la gorge 15, elles sont de préférence égales respectivement à 1,5 et 2 mm environ.

Un système d'entraînement des roues dentées 10, situé de préférence à l'arrière de la platine 2 est tel que les deux roues dentées d'une même paire par exemple 7a,7b, tournent en sens inverse l'une de l'autre, de façon parfaitement synchrone et que l'on a toujours une dent 10a de la roue 7a face à une dent 10b de la roue 7b, les deux dents se faisant face, étant situées dans un même plan perpendiculaire aux montants 4 du magasin 3. La rotation synchrone et séquentielle des roues dentées peut être assurée par un des moyens représentés, éventuellement associés à un système de transmission.

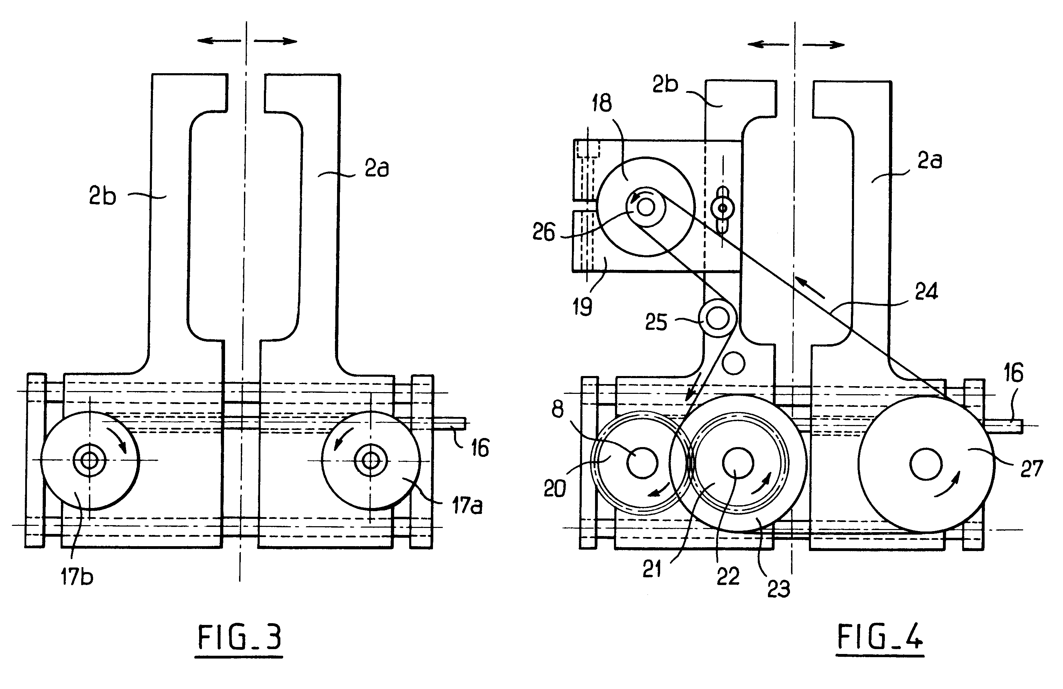

Selon un premier mode de réalisation représenté sur la figure 3, la platine support 2 est en deux parties 2a et 2b qui sont montées soit sur une même vis 16 qui comprend deux filetages inverses, soit chacune sur une vis, de manière à pouvoir déplacer les deux parties 2a et 2b l'une par rapport à l'autre et adapter ainsi l'écartement entre roues dentées 7a et 7b, 11a et 11b à la dimension des blisters 1 à compter et à distribuer. Chaque roue dentée 7a,7b ou couple de roues dentées 7a,11a,7b,11b, est entraîné avec un moteur pas à pas. Dans ces conditions, on a un moteur pas à pas 17a d'entraînement pour la roue dentée 7a ou le couple de roues dentées 7a et 11a, et un moteur pas à pas 17b pour la roue dentée 7b ou le couple de roues dentées 7b et 11b. Les moteurs 17a et 17b sont commandés en synchronisme de manière à faire correspondre les dents 10 des roues dentées qui doivent être situées en regard l'une de l'autre et sensiblement dans un même plan horizontal. Ainsi, le risque de déformation et de mauvais alignement des blisters 1 est évité.

Sur la figure 4 sont représentés d'autres moyens d'entraînement des roues dentées. La platine support 2 est en deux parties 2a et 2b, comme décrites à propos de la figure 3. Un seul moteur pas à pas 18 est monté sur un support 19 qui, à son tour, est monté sur l'une des parties de la platine support 2, par exemple la partie 2b, et commande l'entraînement des roues dentées ou couples de roues dentées, par l'intermédiaire d'une cinématique appropriée, comme par exemple celle représentée sur la figure 4. La cinématique comprend deux pignons à denture droite 20 et 21 qui engrènent l'un par rapport à l'autre, le pignon 20 étant monté sur l'axe 22 d'une poulie 23, et le pignon 21 étant monté sur l'axe 8 solidaire de la roue dentée 7b ou du couple de roues dentées 7b, 11b. Une courroie crantée appropriée 24 passant éventuellement par un tendeur automatique 25, est enroulée sur une poulie 26, montée sur l'axe du moteur 18, sur la poulie 23 puis sur une poulie 27 qui est montée sur l'axe de la roue dentée 7a ou couple de roues dentée 7a,11a.

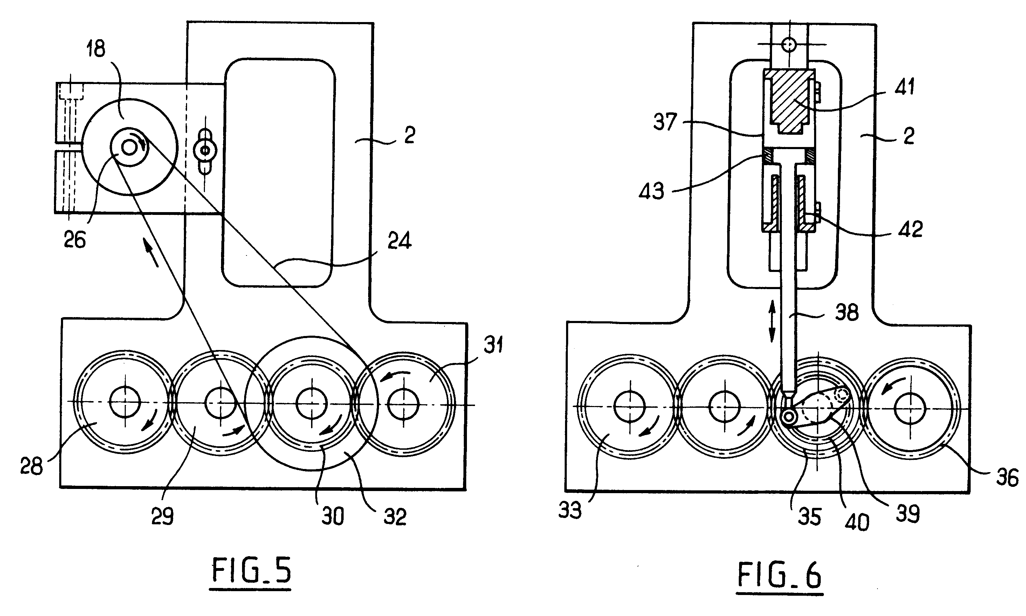

Les moyens d'entraînement représentés sur la figure 5 diffèrent de ceux représentés sur la figure 4 par le fait d'une part, que la platine support 2 est en une seule partie, ce qui implique que seuls les blisters de mêmes dimensions peuvent être comptés et distribués par le dispositif et, d'autre part, il est utilisé quatre pignons à denture droite 28 à 31, et une seule poulie 32. Les pignons 28 et 31 sont associés aux roues dentées ou couples de roues dentées. La courroie 24 qui passe sur les poulies 26 et 32, peut être du type courroie plate crantée. Les pignons 28 à 31 tournent dans le sens indiqué par les flèches de manière que les roues dentées soient entraînées en synchronisme.

Sur la figure 6 sont représentés d'autres moyens d'entraînement. La platine support 2 est en une seule pièce impliquant une seule dimension longitudinale pour les blisters à compter et à distribuer. La cinématique d'entraînement comprend quatre pignons à denture droite 33 à 36 engrenant entre eux, un vérin à double effet 37 dont une extrémité de la tige 38 est solidaire d'un cliquet d'entraînement 39, associé à un pignon d'entraînement 40. Deux butées 41 et 42 de réglage de la quantité de blisters à distribuer sont montées au dessus et au-dessous du piston 43 du vérin 37. Par exemple, le déplacement d'une dent du pignon 40 par le cliquet 39 correspond au comptage d'un blister, les pignons 33 et 36 tournant dans le sens indiqué par les flèches libérant un blister.

Dans un mode particulier de comptage et de distribution de blisters, il est prévu de compter trois blisters dans chaque séquence et de les distribuer dans un godet qui les conduit par trois à la machine de conditionnement automatique. Pour ce faire, le dispositif est équipé de roues dentées ou couples de roues dentées comportant chacune 27 dents et la commande séquentielle du ou des moteurs pas à pas, ainsi qu'éventuellement le ou les réducteurs associés sont réglés de façon à obtenir à chaque impulsion une rotation des roues ou couples de roues dentées correspondant au passage de trois dents, soit une rotation de 40°. Ainsi, à partir de la réserve de blisters 1 contenue dans le magasin 3, chaque impulsion sur le ou les moteurs ou chaque course du piston 43 déclenche la libération de trois blisters dans un godet de la chaîne de conditionnement. Pendant ce temps, au moins trois blister situés au-dessus de ceux qui ont été libérés, sont introduits entre les dents des roues dentées pour ensuite être libérés lors de la séquence suivante.

Le dispositif de comptage et de distribution selon l'invention présente l'avantage d'avoir peu d'éléments fonctionnant de façon alternative et chaque séquence peut être exécutée rapidement sans imposer de contraintes mécaniques rédhibitoires. On peut ainsi obtenir des rythmes de fonctionnement élevés, de l'ordre de 3 à 5 séquences par seconde. Le nombre de blisters délivrés à chaque séquence dépend uniquement de l'angle de rotation des roues et les réglages sont faits rapidement, en changeant le nombre d'impulsions transmises au (ou aux) moteur(s) pas à pas, ou en modifiant la course du (ou des) vérin(s) pneumatique(s). De plus, chaque blister a sa translation contrôlée par au moins une paire de dents et la présence de blisters légèrement voilés ou courbés ne perturbe pas le fonctionnement de l'ensemble de la chaîne de conditionnement.

L'application décrite ci-dessus est réalisée sur une chaîne de conditionnement et de médicaments présentés sous forme de gélules, mais le dispositif de distribution et de comptage de blisters selon l'invention peut trouver son application dans tout autre domaine du conditionnement de produits présentés sous blisters à bords minces :
- formes pharmaceutiques telles que gélules, comprimés, dragées, capsules, suppositoires,
- petits articles à usage médical comme des pansements, formulation transdermiques, bâtonnets,
- petits accessoires de bricolage,
- conditionnements unitaires de l'agroalimentaire.

## Revendications

1. Dispositif de comptage et de distribution de blisters, caractérisé en ce qu'il comprend au moins une paire de roues dentées (7a, 7b), des moyens d'entraînement (17a, 17b) en rotation contrôlée des roues dentées et des moyens d'asservissement des moyens d'entraînement pour permettre le comptage et la distribution des blisters (1) qui sont disposés les uns au-dessus de autres dans le magasin.

2. Dispositif selon la revendication 1, caractérisé en ce que deux bords (9a, 9b) opposés des blisters (1) sont au moins partiellement disposés entre deux dents consécutives (10) des roues dentées.

3. Dispositif selon l'une des revendications 1 ou 2, caractérisé en ce qu'il comprend deux paires de roues dentées (7a, 7b ; 11a, 11b) disposées l'une derrière l'autre.

4. Dispositif selon la revendication 3, caractérisé en ce que les quatre roues dentées sont montées deux à deux sur deux axes parallèles (8).

5. Dispositif selon l'une des revendications 1 à 4, caractérisé en ce que l'écartement entre deux dents consécutives de chaque roue dentée est sensiblement égal à l'épaisseur du blister.

6. Dispositif selon l'une des revendications 1 à 5, caractérisé en ce que chaque dent des roues dentées présente un profil asymétrique, dont une partie est constituée par un chanfrein (12).

7. Dispositif selon la revendication 6, caractérisé en ce que le chanfrein (12) est incliné sur l'horizontale d'un angle compris entre 30 et 60°.

8. Dispositif selon la revendication 1, caractérisé en ce que les moyens d'entraînement en rotation contrôlée des roues dentées sont constitués par au moins un moteur ou motoréducteur pas à pas (17a, 17b, 18).

9. Dispositif selon l'une des revendications 1, 3, 4 ou 8, caractérisé en ce que les moyens d'entraînement en rotation contrôlée des roues dentées sont constitués par deux moteurs (17a, 17b) ou motoréducteurs à commande simultanée, chaque moteur ou motoréducteur étant placé sur chacun des axes (8) des roues dentées.

10. Système de conditionnement de blisters, caractérisé en ce qu'il comprend au moins un dispositif selon l'une des revendications 1 à 9.
